# EUROPÄISCHE PATENTSCHRIFT

(11) **EP 1 230 047 B1**
(45) Veröffentlichungstag und Bekanntmachung des Hinweises auf die Patenterteilung: **19.05.2004**
(21) Anmeldenummer: 00975665.1
(22) Anmeldetag: 15.11.2000
(51) Int. Cl.: B21F 23/00, B65G 47/14

(54) **VERFAHREN UND VORRICHTUNG ZUM BEHANDELN VON DRÄHTEN**
METHOD AND DEVICE FOR HANDLING WIRES
PROCEDE ET DISPOSITIF POUR LA MANIPULATION DE FILS METALLIQUES

(30) Priorität: 19.11.1999 AT 196299
(43) Veröffentlichungstag der Anmeldung: 14.08.2002
(73) Patentinhaber: EVG Entwicklungs- u. Verwertungs- Gesellschaft m.b.H., A-8074 Raaba (AT)
(72) Erfinder: RITTER, Klaus, A-8042 Graz (AT)
(74) Vertreter: Holzer, Walter, Dipl.-Ing.
(86) Internationale Anmeldenummer: PCT/AT2000/000303
(87) Internationale Veröffentlichungsnummer: WO 2001/038020

(56) Entgegenhaltungen:
- EP-A- 0 348 763
- AT-B- 368 414
- CH-A- 442 150
- DE-A- 2 134 886

## Beschreibung

Die Erfindung betrifft ein Verfahren zum Herauslösen und Überführen von abgelängten Drähten aus einem losen, ungeordneten Drahtbündel in eine Einfachlage von parallelen Drähten, wobei zunächst aus dem Bündel von losen, ungeordneten Drähten ein kleineres Teilbündel entnommen und in den Wirkungsbereich einer Auskämmeinrichtung gebracht wird und der ausgekämmte Draht anschließend auf geneigten Flächen aufgrund seiner Schwerkraft in die Einfachlage rutscht und/oder rollt. Die Erfindung betrifft weiterhin eine Vorrichtung zur Durchführung der Verfahrens gemaß dem Oberbegriff der Anspruchs 2.

Aus der AT-B 368 414 ist eine Vorrichtung bekannt, die einen Transportwagen für ein großes loses Bündel und eine Entnahmeeinrichtung zum Herausnehmen eines kleineren Bündels aus dem großen Bündel und zum Ablegen des kleinen Bündels in eine Zwischenauflage aufweist. An die Zwischenauflage schließt ein gegen die Horizontale nach unten geneigter Drahtführungskanal für eine Einfachlage von Drähten an, dessen unterer Seitenteil zur Anpassung der lichten Weite des Drahtführungskanals an den Durchmesser der zu verarbeitenden Drähte entsprechend gegen den oberen Seitenteil verschiebbar ist. Der Drahtführungskanal weist an seinem unteren Ende einen Anschlag für die im Drahtführungskanal befindliche Einfachlage von Drähten auf, der den oberen Seitenteil überragt und damit den Drahtführungskanal nach oben frei gibt. Im Bereich der Zwischenauflage ist ein hin- und herschwenkbarer Abstreifdaumen angeordnet, der die Drähte in der Zwischenauflage derart in Bewegung versetzt, dass sie der Schwerkraft folgend einzeln in den Drahtführungskanal gleiten. Aus dem Anschlag des Drahtführungskanals werden einzelne Drähte mit Hilfe einer Vereinzelungseinrichtung entnommen und einem Verbraucher zugeführt. Die bekannte Vorrichtung hat den Nachteil, dass der Abstreifdaumen die Drähte nur in ihrem mittleren Bereich in Bewegung versetzt und dadurch stark ungeordnete, verzopfte Drähte nicht aus dem Bündel lösen kann.

Aus der DE-A-21 34 886 bzw. der CH-A-442 150 ist eine Vorrichtung der einleitend angegebenen Art bekannt, die analog zur oben beschriebenen Vorrichtung aufgebaut ist, jedoch anstelle des Abstreifdaumens eine rotierende Walze mit kreiszylindrischen Querschnitt aufweist. Nachteilig bei dieser bekannten Vorrichtung ist, dass eine solche Walze lediglich Reibungskräfte auf die Drähte übertragen kann und dadurch die Krafteinwirkung auf die Drähte nicht stark genug ist, um die ungeordneten Drähte entwirren zu können. Die DE-A-2 134 886 offenbart auch ein Verfahren der ernlertend augegebenen Art.

Aufgabe der Erfindung ist es, die geschilderten Nachteile zu vermeiden und ein Verfahren sowie eine Vorrichtung der einleitend angegebenen Art zu schaffen, die es ermöglichen, mit konstruktiv einfachen Mitteln Drähte aus einem Bündel ungeordneter, abgelängter Drähte herauszulösen und störungsfrei sowie kontinuierlich in einen Drahtführungskanal zu fördern, in welchem sie in einer Einfachlage angeordnet werden, um die Drähte einem nachgeschalteten Verbraucher vereinzelt übergeben zu können.

Das erfindungsgemäße Verfahren zeichnet sich dadurch aus, dass die Auskämmeinrichtung mehrere kontinuierlich antreibbare Auskämmräder aufweist und dass zum Ordnen der Drähte im Teilbündel die Drähte des Teilbündels einzeln nacheinander von einem Auskämmrad erfasst und ausgekämmt werden.

Gegenstand der Erfindung ist ferner eine Vorrichtung zum Durchführen des Verfahrens, mit einer Ablage für das Drahtbündel, mit einer Einrichtung zur Entnahme eines kleineren Teilbündels aus dem Drahtbündel und zum Überführen desselben auf eine Zwischenauflage im Wirkungsbereich der Auskämmeinrichtung, mit einem gegen die Horizontale geneigten Drahtführungskanal und mit einer Einrichtung zum Übergeben der Drähte an einen nachgeschalteten Verbraucher; diese Vorrichtung zeichnet sich dadurch aus, dass die Auskämmeinrichtung mehrere kontinuierlich antreibbare Auskämmräder aufweist, die über die Längserstreckung der zu verarbeitenden Drähte vorzugsweise gleichmäßig verteilt und mit Zähnen zum Auskämmen der Drähte versehen sind, wobei die Drehrichtung der Auskämmräder gegen die Neigungsrichtung des Drahtführungskanals gerichtet ist.

Vorzugsweise ist vorgesehen, dass der Draht führungskanal aus mehreren parallelen Drahtschächten besteht, von denen jeder aus paarweise zusammenwirkenden, vertikal und parallel verlaufenden oberen und unteren Blechen gebildet ist, wobei die unteren Bleche an ihrem oberen Ende eine als Zwischenauflage für ein kleineres Drahtbündel dienende, weniger geneigte Kontur aufweisen und an ihrem unteren Ende die oberen Bleche überragen sowie mit einem Anschlag für die aus den Drahtschächten austretenden Drähte versehen sind.

Weitere Merkmale und Vorteile der Erfindung werden nachfolgend an einem Ausführungsbeispiel unter Bezugnahme auf die Zeichnungen näher erläutert. Es zeigen: Fig. 1 eine schematische Seitenansicht eines Ausführungsbeispieles einer erfindungsgemäßen Vorrichtung, Fig. 2 den Schnitt A-A in Richtung der Pfeile gesehen sowie die Fig. 3a und 3b je eine Prinzipskizze zur Arbeitsweise der erfindungsgemäßen Vorrichtung.

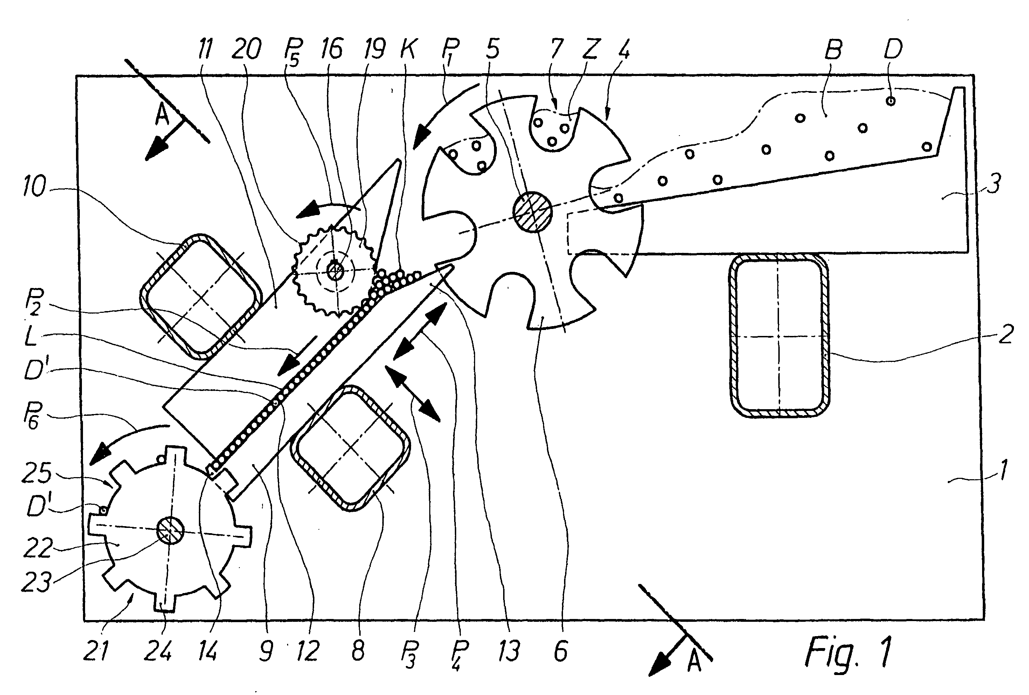

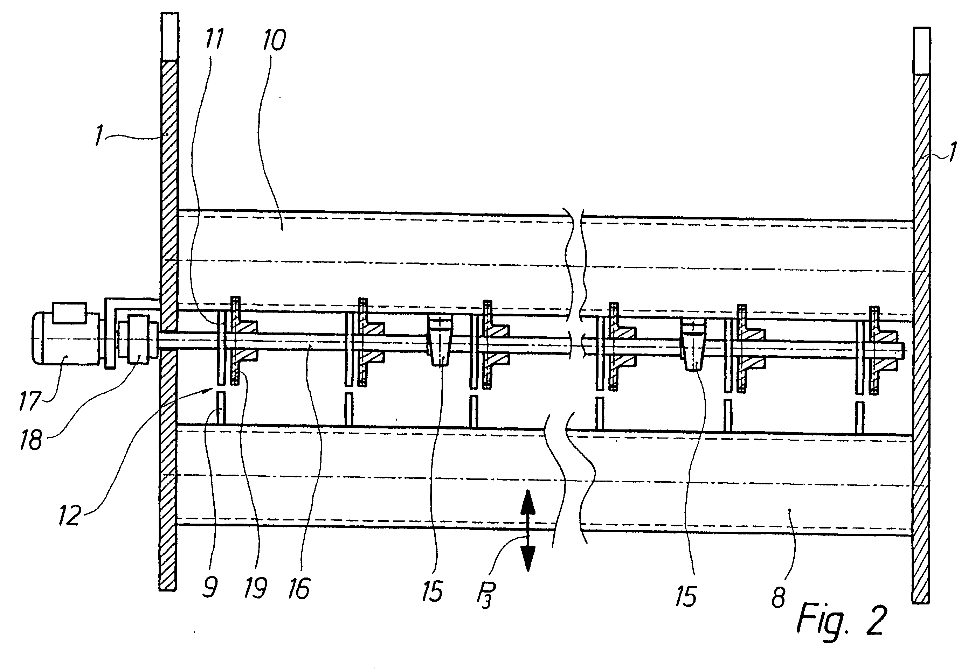

Die in den Fig. 1 und 2 dargestellte erfindungsgemäße Vorrichtung dient zum Herauslösen abgelängter Drähte D aus einem Bündel B ungeordneter Drähte und zum Überführen der Drähte D' in eine Einfachlage L sowie zum anschließenden Zuführen der Drähte D' zu einem nachgeschalteten Verbraucher. Die Oberfläche der Drähte D, D' kann eine glatte oder, wie bei Bewehrungsdrähten üblich, eine gerippte Oberfläche aufweisen.

Zwischen zwei orstfesten, vertikalen Tragplatten 1 ist ein Träger 2 angeordnet, der ein Vorratsmagazin 3 für das große Bündel B trägt. Das Magazin 3 ragt in den Wirkungsbereich eines Vorportionierers 4, der aus mehreren auf einer Welle 5 gelagert Förderrädern 6 besteht, die entsprechend der Pfeilrichtung P1 antreibbar sind. Die Förderräder 6 weisen mehrere am Umfang verteilte Fächer 7 auf, die zur Aufnahme je eines kleineren Teilbündels K von Drähten dienen.

Auf einem zwischen den Tragplatten 1 verlaufendem unteren Rollbahnträger 8 sind mehrere untere Rollbahnbleche 9 angeordnet, die vertikal und senkrecht zur Längsrichtung der Drähte D im Teilbündel K verlaufen. Auf einem zwischen den Tragplatten 1 verlaufendem oberen Rollbahnträger 10 sind mehrere obere, ebenfalls vertikal und senkrecht zur Längsrichtung der Drähte D im Teilbündel K verlaufende Rollbahnbleche 11 derart angeordnet, dass sie zusammen mit den gegenüberliegenden unteren Rollbahnblechen 9 paarweise je einen Drahtschacht 12 bilden. Alle Drahtschächte 12 zusammen bilden einen Drahtführungskanal. Die unteren und oberen Rollbahnbleche 9; 11 sind derart angeordnet, dass die Drahtschächte 12 gegen die Horizontale nach unten geneigt sind. Durch diese Neigung rutschen die Drähte D' entsprechend der Pfeilrichtung P2 in den Drahtschächten 12 nach unten. Die unteren Rollbahnbleche 9 weisen an ihrem oberen Ende eine Kontur auf, die nur geringfügig gegen die Horizontale geneigt ist und als Zwischenauflage 13 für das kleinere, vom Vorportionierer 4 entnommene Teilbündel K dient. Die unteren Rollbahnbleche 9 überragen an ihrem unteren Ende die oberen Rollbahnbleche 11 und weisen einen Anschlag 14 auf. Die unteren und oberen Rollbahnbleche 9; 11 sind gleichmäßig über die Breite der entsprechenden Rollbahnträger 8; 10 verteilt und parallel mit seitlichem Abstand zueinander angeordnet. Die Anzahl der Rollbahnbleche 9; 11 und deren seitlicher Abstand zueinander ist auf die maximale Länge und auf den Durchmesser der Drähte D im Teilbündel K angepaßt und wird derart gewählt, daß die Drähte D in den Drahtschächten 12 exakt und sicher geführt werden. Der untere Rollbahnträger 8 ist entsprechend den Doppelpfeilen P3 und P4 verstellbar, um einmal die lichte Weite der Drahtschächte 12 an den Durchmesser der zu vereinzelnden Drähte anzupassen und zum anderen den Anschlag 14 derart zu verschieben, dass nur ein Draht D' die oberen Rollbahnbleche 11 überragt und die Drahtschächte 12 verlassen kann.

Im oberen Bereich der Drahtschächte 12 sind am oberen Rollbahnträger 10 zwei Wellenlager 15 befestigt, die eine Rubblerwelle 16 aufnehmen. Die Rubblerwelle 16 wird von einem Antriebsmotor 17 über eine Kupplung 18 entsprechend der Richtung des Pfeiles P5 angetrieben. Auf der Rubblerwelle 16 sind mehrere Auskämmräder 19 drehfest angeordnet, wobei jedem Rollbahnblechpaar 9; 11 ein Auskämmrad 19 zugeordnet ist, so dass die Auskämmräder 19 ebenfalls gleichmäßig über die Längserstreckung der zu verarbeitenden Drähte D verteilt sind. Im Rahmen der Erfindung ist es jedoch möglich, die Verteilung der Auskämmräder 19 so zu wählen, dass im mittleren Bereich der Drähte die seitlichen Abstände der Auskämmräder 19 geringer sind als in den Randbereichen. Jedes Auskämmrad 19 hat die Gestalt eines Kettenrades und weist mehrere am Umfang verteilte Zähne 20 auf, wobei die Größe und Tiefe der Zwischenräume zwischen den Zähnen 20 auf den Durchmesserbereich der zu vereinzelnen Drähte abgestimmt ist. Die Spitze der Zähne 20 sind abgerundet und schließen bündig mit der die Drahtschächte 12 bildenden Unterkante der oberen Rollbahnbleche 11 ab.

Am unteren Ende der Drahtschächte 12 ist eine Vereinzelungseinrichtung 21 angeordnet, die aus mehreren Scheiben 22 bestehen. Alle Scheiben 22 sind auf einer entsprechend der Pfeilrichtung P6 antreibbaren Welle 23 drehfest angeordnet und weisen mehrere am Umfang verteilte Mitnehmervorsprünge 24 auf, die in den Bereich des am Anschlag 14 der unteren Rollbahnbleche 9 anliegenden Drahtes reichen. Die Mitnehmervorsprünge 24 schließen jeweils ein Drahtfach 25 zur Aufname eines vereinzelten Drahtes D' ein. Von der Vereinzelungseinrichtung 21 werden die vereinzelten Drähte D' einem nachgeschalteten Verbraucher, beispielsweise einer Drahtgitterschweißmaschine, zugeführt. Im Rahmen der Erfindung ist es möglich, alle Drahtfächer 25 mit je einem Draht D' zu füllen und/oder ausgewählte Drahtfächer 25 nicht mit Drähten D' zu bestücken. Im Rahmen der Erfindung ist es weiterhin möglich, durch entsprechende Drehbewegung der Vereinzelungsscheiben 22 die Drahtfächer 25 mit zwei Drähten zu bestücken, um beispielsweise sogenannte Doppeldrähte im nachgeschalteten Verbraucher zu verarbeiten.

Die Vorrichtung arbeitet in folgender Weise:

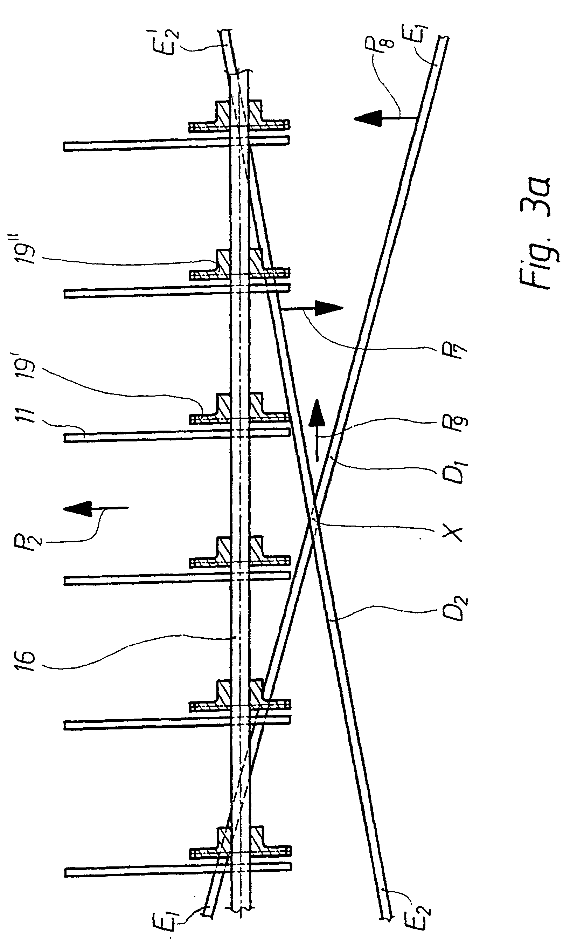

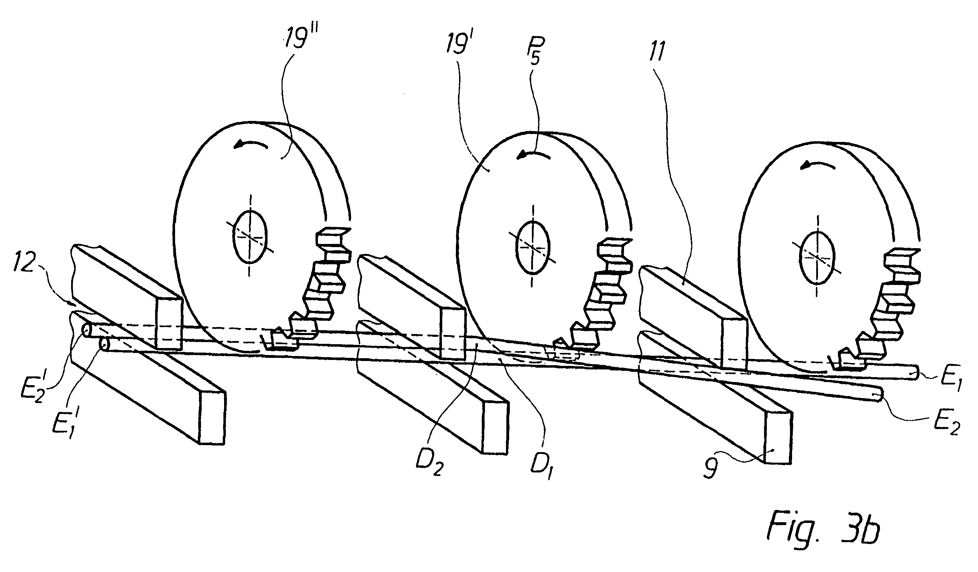

Aus dem im Vorratsmagazin 3 liegenden Bündel B von ungeordneten Drähten D werden mit Hilfe der in Richtung des Pfeiles P1 drehbaren Förderräder 6 des Vorportionierers 4 mehrere Drähte aus dem Bündel B herausgelöst und in Richtung des Pfeiles P1 auf die Zwischenauflage 13 gefördert. Die Fördergeschwindigkeit des Vorportionierers 4 wird derart gewählt, daß die Zwischenauflage 13 immer mit Drähten D' gefüllt ist. Auf der leicht nach unten geneigten Zwischenauflage 13 rutschen die Drähte D infolge der Schwerkraft in die Drahtschächte 12. Da die Drähte D auf der Zwischenauflage 13 jedoch ungeordnet sind, kann nicht vermieden werden, dass, wie in Fig. 1 dargestellt, die Drähte auch in mehreren Lagen übereinander auf der Zwischenauflage 13 liegen. Hierbei können sich die Drähte D derart verkeilen, dass ein Rutschen weiterer Drähte in die Drahtschächte 12 verhindert wird. Um diese Blockade aufzulösen und gar nicht erst entstehen zu lassen, werden die Drähte D in der Zwischenauflage 13 durch die Drehbewegung der Auskämmräder 19 in folgender Weise bearbeitet: Durch die kontinuierliche Drehbewegung der Auskämmräder 19 werden die über der untersten Drahtlage im Bereich der Eingangsöffnung der Drahtschächte 12 liegenden Drähte D von den Zähnen 20 der Auskämmräder 19 erfaßt, angehoben und über die unten liegenden Drähte vom Eingang der Drahtschächte 12 weg gefördert, wodurch eine Blockade der Drahtschächte 12 aufgelöst wird. Durch diese Förderbewegung wird gleichzeitig auch die unterste Drahtlage etwas aufgelockert, so dass die vordersten Drähte leichter in die Drahtschächte 12 rutschen oder rollen können. In den Figuren 3a und 3b wird dieser Vorgang an einem vereinfachten Beispiel mit nur zwei einander kreuzenden Drähten D1 und D2 schematisch dargestellt, wobei der Draht D1 im Kreuzungspunkt X unten liegt. Die gekreuzt übereinander liegenden Drähte D1 und D2 können zunächst jeder für sich mit ihren Enden E1' bzw. E2' in die Schächte 12 eintreten und solange nach unten rutschen, bis der Kreuzungspunkt X beider Drähte D1; D2 am Eingang der Schächte 12 ankommt. Da der Kreuzungspunkt X die doppelte Drahtstärke hat, können die beiden Drähte D1, D2 nicht weiter rutschen und blockieren sich gegenseitig. Diese Blockade wird erfindungsgemäß durch das dem Kreuzungspunkt X am nächsten liegende Auskämmrad 19' aufgelöst, indem es den oben liegenden Draht D2, wie in Fig. 3b dargestellt, erfasst und das Ende E2' ein Stück aus den Schächten 12 entsprechend der Pfeilrichtung P7 herauszieht. Durch diese Bewegung des Drahtes D2 kommt der unten liegende Draht D1 etwas frei und sein freies Ende E1 kann entsprechend der Pfeilrichtung P8 in die Schächte 12 nachrutschen. Nach dieser Bewegung wandert der Kreuzungspunkt X entsprechend der Pfeilrichtung P9 in Richtung zum in den Schächten 12 verbliebenen Ende E2' des oben liegenden Drahtes D2. Nunmehr gelangt das benachbarte Auskämmrad 19'' in Eingriffstellung, erfasst den Draht D2 und zieht das Ende E2' noch mehr aus den Schächten 12 heraus, so dass das freie Ende E1 des Drahtes D1 weiter in die Schächte 12 nachrutschen kann. Dieser Vorgang wiederholt sich so lange an den folgenden Auskämmrädern 19, bis das Ende E2' des oben liegenden Drahtes D2 vollständig aus den Schächten 12 herausgezogen ist, wodurch der Kreuzungspunkt X verschwindet und der unten liegende Draht D1 vollständig in die Schächte 12 rutschen oder rollen kann. Der ursprünglich oben liegende Draht D2 liegt nunmehr ebenfalls eben auf der Zwischenauflage 13 und kann unmittelbar danach ebenfalls in die Schächte 12 rutschen oder rollen. In Fig. 3b ist ein weiterer Blockadefall dargestellt, bei welchem das Ende E2' des oben liegende Draht D2 weiter unten in den Schächten 12 liegt als das Ende E1' des unten liegende Draht D1. In diesem Fall wird ebenfalls der oben liegende Draht D2 vom Auskämmrad 19' erfasst und das Ende E2' des oben liegenden Drahtes D2 aus den Schächten 12 herausgezogen, wobei das Ende E1' des unten liegenden Drahtes D1 vom Ende E2' des oben liegenden Drahtes D2 mit herausgeschoben wird. Das benachbarte Auskämmrad 19'' gelangt anschließend in Eingriff und zieht das Ende E2' weiter aus den Schächten 12 heraus. Dieser Vorgang wiederholt sich analog zum Beispiel gemäß Fig. 3a solange bis die Blockade gelöst ist und der Draht D1 und anschließend der Draht D2 in die Schächte 12 rutschen oder rollen können. Die erfindungsgemäße Vorrichtung kann auch mehrere blockierte Drähte aus den Schächten 12 herauskämmen.

Es versteht sich, daß das dargestellte Ausführungsbeispiel im Rahmen des allgemeinen Erfindungsgedankens verschiedentlich, insbesondere hinsichtlich der Ausgestaltung und Ausführung des Vorportionierers und der Vereinzelungseinrichtung abgewandelt werden kann. Im Rahmen der Erfindung ist es möglich, anstelle der Förderräder Transportketten oder Transportbänder zu verwenden. Die Vereinzelungseinrichtung kann beispielsweise aus Auskämmorganen mit nachgeschalteten Transporteinrichtungen bestehen. Des weiteren ist es im Rahmen der Erfindung möglich, die Zustellbewegung und die Positionierbewegung des unteren Rollbahnträgers in einer Bewegung zusammen zu fassen.

## Patentansprüche

1. Verfahren zum Herauslösen und Überführen von abgelängten Drähten (D) aus einem losen, ungeordneten Drahtbündel (B) in eine Einfachlage (L) von parallelen Drähten, wobei zunächst aus dem Bündel von losen, ungeordneten Drähten ein kleineres Teilbündel (K) entnommen und in den Wirkungsbereich einer Auskämmeinrichtung (19) gebracht wird und der ausgekämmte Draht anschließend auf geneigten Flächen aufgrund seiner Schwerkraft in die Einfachlage rutscht und/oder rollt, **dadurch gekennzeichnet, dass** die Auskämmeinrichtung mehrere kontinuierlich antreibbare Auskämmräder (19, 19', 19") aufweist und dass zum Ordnen der Drähte (D) im Teilbündel (K) die Drähte (D2) des Teilbündels (K) einzeln nacheinander von einem Auskämmrad (19, 19', 19") erfasst und ausgekämmt werden.

2. Vorrichtung zum Durchführen des Verfahrens nach Anspruch 1, mit einer Ablage für das Drahtbündel (B), mit einer Einrichtung (4) zur Entnahme eines kleineren Teilbündels (K) aus dem Drahtbündel (B) und zum Überführen desselben auf eine Zwischenauflage (13) im Wirkungsbereich einer Auskämmeinrichtung (19), mit einem gegen die Horizontale geneigten Drahtführungskanal (12) und mit einer Einrichtung (21) zum Übergeben der Drähte an einen nachgeschalteten Verbraucher, **dadurch gekennzeichnet, dass** die Auskämmeinrichtung mehrere kontinuierlich antreibbare Auskämmräder (19, 19', 19") aufweist, die über die Längserstreckung der zu verarbeitenden Drähte (D) vorzugsweise gleichmäßig verteilt und mit Zähnen (20) zum Auskämmen der Drähte (D) versehen sind, wobei die Drehrichtung (P5) der Auskämmräder (19, 19', 19") gegen die Neigungsrichtung des Drahtführungskanals (12) gerichtet ist.

3. Vorrichtung nach Anspruch 2, **dadurch gekennzeichnet, dass** die Zähne (20) der Auskämmräder (19, 19', 19") an ihren Spitzen abgerundet sind.

4. Vorrichtung nach Anspruch 2 oder 3, **dadurch gekennzeichnet, dass** der Drahtführungskanal aus mehreren parallelen Drahtschächten (12) besteht, von denen jeder aus paarweise zusammenwirkenden, vertikal und parallel verlaufenden oberen und unteren Blechen (9, 11) gebildet ist, wobei die unteren Bleche (9) an ihrem oberen Ende eine als Zwischenauflage (13) für ein kleineres Drahtbündel (K) dienende, weniger geneigte Kontur aufweisen und an ihrem unteren Ende die oberen Bleche (11) überragen sowie mit einem Anschlag (14) für die aus den Drahtschächten (12) austretenden Drähte (D') versehen sind.

5. Vorrichtung nach einem der Ansprüche 2 bis 4, **dadurch gekennzeichnet, dass** die Zähne (20) der Auskämmräder (19, 19', 19") bündig mit der Unterkante der oberen Bleche (11) abschließen.

## Claims

1. Method for detaching and transferring wires (D), cut in lengths, from a loose, disordered bundle of wires (B) into a single layer (L) of parallel wires, wherein firstly a smaller partial bundle (K) is removed from the bundle of loose, disordered wires and brought into the operating area of a combing out device (19) and the combed out wire then slides and/or rolls into the single layer on inclined faces owing to its gravity, **characterised in that** the combing out device has several continuously drivable combing out wheels (19, 19', 19") and for organising the wires (D) in the partial bundle (K) the wires (D2) of the partial bundle (K) are grasped individually in succession by a combing out wheel (19, 19', 19") and combed out.

2. Device for carrying out the method according to claim 1, with a depository for the bundle of wires (B), a device (4) for removing a smaller partial bundle (K) from the bundle of wires (B) and for transferring said partial bundle on to an intermediate base (13) in the operating area of a combing out device (19), a wire guide channel (12) inclined against the horizontal and a device (21) for passing on the wires to a consumer connected downstream, **characterised in that** the combing out device has several continuously drivable combing out wheels (19, 19', 19") which are preferably evenly distributed over the longitudinal extension of the wires (D) to be processed and provided with teeth (20) to comb out the wires (D), the direction of rotation (P5) of the combing out wires (19, 19', 19") being directed against the direction of inclination of the wire guide channel (12).

3. Device according to claim 2, **characterised in that** the teeth (20) of the combing out wheels (19, 19', 19") are rounded on their tips.

4. Device according to claim 2 or 3, **characterised in that** the wire guide channel consists of several parallel wire shafts (12), each of which is formed from upper and lower sheets (9, 11) interacting in pairs and running vertical and parallel, wherein the lower sheets (9) have on their upper end a less inclined contour serving as intermediate base (13) for a smaller bundle of wires (K) and on their lower end project beyond the upper sheets (11) and are provided with a limit stop (14) for the wires (D') issuing from the wire shafts (12).

5. Device according to one of claims 2 to 4, **characterised in that** the teeth (20) of the combing out wheels (19, 19', 19") occlude flush with the lower edge of the upper sheets (11).

## Revendications

1. Procédé pour extraire et transférer des fils coupés à longueur (D) à partir d'un faisceau de fils libres désordonnés (B) en une couche unique (L) de fils parallèles, dans lequel on prélève d'abord un plus petit faisceau partiel (K) hors du faisceau de fils libres désordonnés et on le transporte dans la zone d'action d'un appareil de démêlage (19) et le fil démêlé glisse et/ou roule ensuite sur des surfaces inclinées, en raison de sa pesanteur, jusque dans la couche unique, **caractérisé en ce que** le dispositif de démêlage présente plusieurs roues de démêlage actionnables en continu (19, 19', 19") et **en ce que**, pour ordonner les fils (D) dans le faisceau partiel (K), les fils (D2) du faisceau partiel (K) sont saisis un à un l'un après l'autre et démêlés par une roue de démêlage (19, 19', 19").

2. Dispositif pour la mise en oeuvre du procédé selon la revendication 1, avec un support pour le faisceau de fils (B), avec un dispositif (4) pour prélever un plus petit faisceau partiel (K) hors du faisceau de fils (B) et pour le transférer sur un support intermédiaire (13) dans la zone d'action d'un dispositif de démêlage (19), avec un canal de guidage de fils (12) incliné par rapport à l'horizontale et avec un dispositif (21) pour transmettre les fils à un consommateur suivant, **caractérisé en ce que** le dispositif de démêlage présente plusieurs roues de démêlage actionnables en continu (19, 19', 19"), qui sont réparties, de préférence uniformément, sur la longueur des fils à manipuler (D) et qui sont pourvues de dents (20) pour démêler les fils (D), dans lequel le sens de rotation (P5) des roues de démêlage (19, 19', 19") est orienté dans le sens contraire à l'inclinaison du canal de guidage de fils (12).

3. Dispositif selon la revendication 2, **caractérisé en ce que** les dents (20) des roues de démêlage (19, 19', 19") sont arrondies à leurs pointes.

4. Dispositif selon la revendication 2 ou 3, **caractérisé en ce que** le canal de guidage de fils se compose de plusieurs puits à fils (12) parallèles, dont chacun est formé de tôles supérieures et inférieures (9, 11) placées parallèlement et verticalement et coopérant par paires, dans lequel les tôles inférieures (9) présentent à leur extrémité supérieure un contour moins incliné servant de support intermédiaire (13) pour un plus petit faisceau de fils (K) et dépassent à leur extrémité inférieure les tôles supérieures (11) et sont pourvues d'une butée (14) pour les fils (D') sortant des puits à fils (12).

5. Dispositif selon l'une quelconque des revendications 2 à 4, **caractérisé en ce que** les dents (20) des roues de démêlage (19, 19', 19") se terminent au niveau de l'arête inférieure des tôles supérieures (11).
